# EUROPÄISCHE PATENTSCHRIFT

(11) **EP 1 543 268 B1**
(45) Veröffentlichungstag und Bekanntmachung des Hinweises auf die Patenterteilung: **08.11.2006**
(21) Anmeldenummer: 03769304.1
(22) Anmeldetag: 23.09.2003
(51) Int. Cl.: F16L 43/00, C10G 9/20

(54) **ROHRABSCHNITT FÜR EINE ROHRSCHLANGE**
PIPE SECTION FOR A PIPE COIL
PARTIE TUBE POUR TUBE EN SERPENTIN

(30) Priorität: 23.09.2002 DE 10244150
(43) Veröffentlichungstag der Anmeldung: 22.06.2005
(73) Patentinhaber: Schmidt + Clemens GmbH + Co. KG, 51789 Lindlar (DE)
(72) Erfinder: JAKOBI, Dietlinde, 50733 Köln (DE); GANSER, Benno, 63755 Alzenau (DE); KREMER, Norbert, 51789 Lindlar (DE)
(74) Vertreter: Tilmann, Max Wilhelm
(86) Internationale Anmeldenummer: PCT/EP2003/010565
(87) Internationale Veröffentlichungsnummer: WO 2004/029500

(56) Entgegenhaltungen:
- EP-A- 0 980 729
- EP-A- 1 122 005
- DE-U- 20 214 672
- US-A- 4 444 589
- US-A- 5 339 868
- US-A1- 2002 034 463
- PATENT ABSTRACTS OF JAPAN Bd. 2000, Nr. 11, 3. Januar 2001 (2001-01-03) -& JP 2000 234887 A (KUBOTA CORP), 29. August 2000 (2000-08-29)

## Beschreibung

Die Erfindung befaßt sich mit Rohrabschnitten für eine Rohrschlange, insbesondere für Rohrschlangen für chemische Anlagen, beispielsweise petrochemische Anlagen wie Ethylencracker.

Bei Ethylencrackern ist es bekannt, das zu crackende Medium in einer mehrfach gebogenen Rohrschlange durch einen Erhitzungsraum, beispielsweise einen Ofen, zu führen. Diese Rohrschlangen bestehen teilweise aus geradlinigen Rohren, die zur Bildung einer durchgängigen Rohrschlange in ihren Endbereichen über gebogene, mit den geradlinigen Rohren über Fügeverfahren verbundene Rohrabschnitte miteinander verbunden sind.

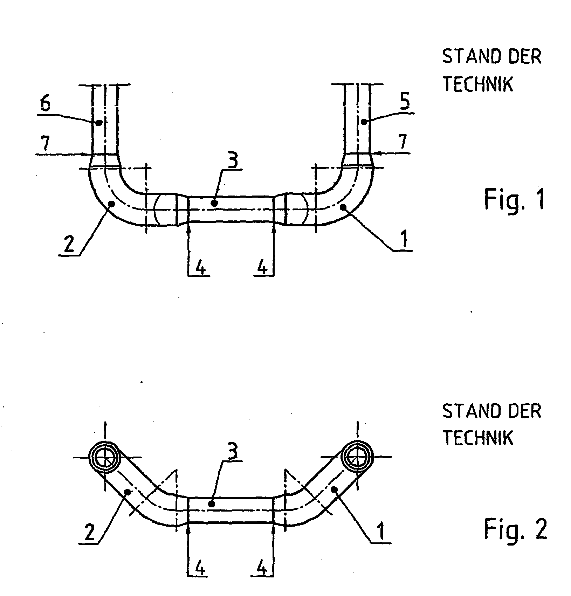

Ein Ausschnitt einer solchen aus dem Stand der Technik bekannten Rohrschlange ist beispielhaft in den Fig. 1 und 2 dargestellt. Bei dieser Rohrschlange sind die Rohre durch als Fittings bezeichnete, gebogene Rohrabschnitte verbunden. Die Fittings werden beispielsweise durch statischen Guß hergestellt und bilden einen einzigen Rohrbogen. Endseits sind die Fittings an Rohre angeschweißt.

Im Rahmen dieser Erfindung wird ein Rohrbogen als der Bereich eines gekrümmten Rohrs verstanden, in dem sich die Ausrichtung der Längsachse des Rohrs beständig ändert. Der Rohrbogen endet in dem Punkt, ab dem sich die Ausrichtung der Längsachse des Rohrs nicht mehr ändert.

Die Rohrschlangen des Standes der Technik weisen eine Vielzahl von Schweißnähten auf, die benötigt werden, um die einbogigen Fittings mit den Rohren zu verbinden. Hierdurch wird die Herstellung der Rohrschlangen aufwendig. Außerdem bilden Schweißnähte potentielle Schwachstellen für die Rissbildung in einer derartigen Rohrschlange. Da die Fittings und Rohre der bekannten Rohrschlangen häufig aus unterschiedlichen Werkstoffgefügen bestehen, wird der Herstellungsaufwand durch das schwierige Verschweißen unterschiedlicher Metalle weiter erhöht. Zudem haben die aus statischem Guss hergestellten Fittings meist ein hohes Gewicht, so dass bei der hängenden Befestigung der Rohrschlange in einem Ofen, beispielsweise einem Ethylencracker, eine starke Belastung der Aufhängung erfolgt, bzw. ein verstärktes Kriechen (Rohrlängung) der Rohre auftritt. Außerdem führt die herstellungsbedingte erhöhte Wandstärke der Fittings zu einem schlechten Wärmeübergang zwischen dem die Rohrschlange umgebenden Wärmemedium und dem in der Rohrschlange geführten, zu behandelnden Medium. Die stärke Wanddicke führt zudem durch den Temperaturgradienten zu zusätzlichen Spannungen, die zu Rissen in den Fittings führen können.

Aus Patent Abstract of Japan zu JP 2000 234887 A, US 2002/0034463 A1 und EP 1 122 005 A2 ist es bekannt, Rohrabschnitte für chemische Anlagen durch Biegen aus einem geraden Rohr herzustellen. Die dort beschriebenen Rohrabschnitte weisen unter anderem 180°-Bögen oder 90°-Bögen bzw. S-förrnige Bögen auf, also einen Rohrabschnitt mit einem Rohrbogen.

US 4,444,589 offenbart die Möglichkeit, ein Schleudergussrohr mittels induktiven Biegens zu verformen.

US 5,339,868 beschreibt die grundsätzliche Möglichkeit, ein Rohr in einen 90°-Bogen zu verbiegen.

Vor diesem Hintergrund liegt der Erfindung die Aufgabe zugrunde, einen Rohrbogen zu schaffen, der ein leichtes Zusammenfügen einer Rohrschlange erlaubt.

Diese Aufgabe wird durch die nebengeordneten Ansprüche gelöst. Vorteilhafte Ausgestaltungen der Erfindung sind in den Unteransprüchen angegeben.

Die Erfindung baut auf dem Grundgedanken auf, den Rohrabschnitt mit mehreren Rohrbogen zu versehen. Damit kann mit einem einstückig hergestellten, metallischen Rohrabschnitt beispielsweise eine Verbindung zwischen zwei beabstandet zueinander parallel verlaufenden Rohren hergestellt werden. Auf das Verbinden zweier einfach gebogener Rohrabschnitte mit einem Zwischenrohr zur Herstellung dieser Verbindung kann verzichtet werden, wodurch die Zahl der Schweißnähte reduziert wird.

Als Rohrabschnitt wird erfindungsgemäß ein Körper verstanden, der durch Umformen aus einem einstückigen Rohr hergestellt wird. Dieser Rohrabschnitt ist von solchen Teilabschnitten einer Rohrschlange zu unterscheiden, die durch Fügeverfahren, beispielsweise Schweißen, zu einem mehrfach gebogenen Teilabschnitt der Rohrschlange zusammengesetzt werden.

Als Längsachse wird im Rahmen dieser Erfindung die Linie verstanden, die die Flächenmittelpunkte der senkrecht zur Fließrichtung des im Rohrabschnitt geführten Mediums stehenden Querschnitte des in dem Rohrabschnitt zum Durchfluß des in ihm strömenden Mediums vorgesehenen Hohlraums verbindet. Diese Querschnitte sind vorzugsweise kreisförmig oder elliptisch.

Bevorzugt verläuft die Längsachse des Rohrabschnitts zwischen zwei Enden des Rohrabschnitts nicht in einer Ebene. Dadurch ist es möglich, mit dem Rohrabschnitt Teilabschnitte einer Rohrschlange zu erzeugen, die an spezielle Designvorgaben des Ofens, beispielsweise des Crackers, angepaßt sind. Der erfindungsgemäße Rohrabschnitt kann mehr als zwei Enden aufweisen, beispielsweise eine Gabelung aufweisen.

Eine besonders kompakte Bauweise einer Rohrschlange kann erreicht werden, wenn das Verhältnis von Biegeradius zum Rohrdurchmesser des Rohrbogens zumindest abschnittsweise kleiner als 1,5, vorzugsweise zumindest abschnittsweise kleiner als 1,1 und besonders bevorzugt zumindest abschnittsweise gleich 1,04 ist.

Ebenfalls läßt sich durch den erfindungsgemäßen Rohrabschnitt eine besonders kompakte Rohrschlange erzeugen, wenn die Zwischenlängen zwischen zwei Rohrbögen eines Rohrabschnitts klein gehalten werden, vorzugsweise kleiner als 300 mm, insbesondere vorzugsweise kleiner als 100 mm, besonders bevorzugt gleich 40 mm ist. Als Zwischenlänge wird die Länge des Teilabschnitts des erfindungsgemäßen Rohrabschnitts zwischen zwei Rohrbögen bezeichnet, in der sich die Ausrichtung der Längsachse des Rohrabschnitts nicht verändert.

Erfindungsgemäß wird der Rohrabschnitt aus einem der folgenden DIN EN 10027 Teil 1 Werkstofftypen (Werkstoffnummer in Übereinstimmung mit SEW595 und E DIN 17465; bzw. ASTM-Typ*):
GX40CrNiSi25-20 (1.4848; HK 40*),
GX35CrNiSiNb24-24 (1.4855),
GX45NiCrSi35-25 (1.4857; HP*),
GX43NiCrWSi35-25-4 (HP+W*),
GX40NiCrSiNb35-25 (1.4852; HP+Nb*),
GX45NiCrSiNbTi35-25 (HP+Nb Micro*),
GX10NiCrNb32-20 (1.4859; CT 15C*),
GX50CrNiSi30-30 (1.4868),
G-NiCr28W (2.4879),
GX45NiCrSiNb45-35,
GX13NiCrSiNb45-35,
GX13NiCrNb37-25,
GX55NiCrWZr33-30-4 hergestellt.

Eine gleichmäßige Behandlung des in dem Rohrabschnitt geführten Mediums wird erreicht, wenn die Teilbereiche des Rohrabschnitts im wesentlichen die gleichen Durchmesser und/oder Wandstärke aufweisen. Außerdem wird durch die Ausgestaltung des Rohrabschnitts mit im wesentlichen gleicher Wandstärke eine Reduktion der Spannungen in dem Rohrabschnitt erreicht.

Besonders bevorzugt liegt die Wandstärke entlang des gesamten Rohrabschnitts zwischen 6 mm und 14 mm. Beispielsweise liegt die Rohrwandstärke des gesamten Rohrabschnitts minimal bei 8 mm im Zugbereich und maximal bei 11 mm im Druckbereich des Rohrbogens.

In einer vorteilhaften Ausgestaltung der Erfindung weist die Innenoberfläche des Rohrabschnitts zumindest teilweise eine Rauhigkeit von weniger als 12 Rₐ, insbesondere zumindest teilweise eine Rauhigkeit von ca. 3,2 Rₐ auf. Mit der Reduktion der Rauhigkeit der Innenoberfläche wird bei der Verwendung des Rohrabschnitts in Rohrschlangen einer petrochemischen Anlage, bei der Kohlenwasserstoffe in der Rohrschlange behandelt werden, die Ablagerung von Kokspartikeln auf der Innenoberfläche (Verkokung) und die Diffusion von Kohlenstoff ins Werkstoffinnere (Aufkohlung) minimiert. Außerdem wird die Bildung einer gleichmäßigen, dichten Chromoxidschutzschicht auf der Innenoberfläche des Rohrabschnitts durch die glatte Oberfläche begünstigt.

Eine erfindungsgemäße Rohrschlange für eine chemische Anlage, die aus durch Rohrabschnitte miteinander verbundenen einstückig hergestellten, metallischen Rohren zusammengesetzt ist, weist mindestens einen zumindest an einem seiner Enden mit einem der Rohre verbundenen, zuvor beschriebenen, erfindungsgemäßen Rohrabschnitt auf. Diese Rohrschlange läßt sich leicht herstellen, da durch die mehrfach gebogenen Rohrabschnitte parallel verlaufende Rohre leicht und mit einer geringen Zahl von Schweißnähten miteinander verbunden werden können.

Diese Verbindung eines Rohrabschnitts mit zumindest einem seiner Enden mit einem anderen Rohrabschnitt oder einem Rohr erfolgt besonders dann sehr leicht, wenn die Rohrabschnitte bzw. der Rohrabschnitt und das Rohr aus demselben Werkstoff hergestellt sind. Bedingt durch das gleiche Makrogefüge können die Rohre dann einfach miteinander verschweißt werden.

Außerdem weisen die Rohre und die Rohrabschnitte die gleichen mechanischen Eigenschaften und die gleiche Aufkohlungs- und Verkokungsbeständigkeit auf. Dadurch wird der Ersatz von Rohrschlangen oder Teilen von Rohrschlangen planbarer.

Der vorgenannte Rohrabschnitt bzw. die vorgenannte Rohrschlange ist aus einem Schleudergußrohr hergestellt. Das führt zu einer Flexibilität bei der Herstellung der Rohrabschnitte, insbesondere als Fittingersatz, da keine Modellanfertigung oder Modelländerung der zu gießenden Fittings notwendig ist, sondern der Rohrabschnitt unmittelbar in die gewünschte Konfiguration gebogen werden kann. Die erhöhte Flexibilität zeigt sich auch darin, daß für Anlagen, die durch eine besonders starke Kokserosion belastet werden, ohne großen Aufwand Rohrabschnitte mit größeren Umlenkradien hergestellt werden können. Da beim Entkokungsprozeß in petrochemischen Anlagen im Rohrinneren abgelagerter Koks mit Sauerstoff und Wasserdampf abgebrannt wird und dadurch Kokspartikel anfallen, wird hier bei geringen Umlenkradien ein hoher erosiver Abtrag erzeugt. Diese Beschädigung der Innenseite der Rohrabschnitte kann durch größere Umlenkradien reduziert werden.

Rohrabschnitte aus im Schleudergußverfahren gefertigten Rohren besitzen im Bereich der Innenoberfläche feines, globulitisches Makrogefüge, das eine bessere Aufkohlungsbeständigkeit als das bei herkömmlichen Fittings vorhandene stengelige Gefüge besitzt. Außerdem dient das feine Gefüge bei Auftreten von Kriechschäden als Rißstopper. Zudem besitzen durch Schleuderguß hergestellte Rohre durch ihre hohe Umdrehungszahl beim Herstellungsprozeß bedingt eine viel höhere Reinheit als Gußteile aus statischem Guß.

Indem der mehrfach gebogene Rohrabschnitt aus einem geraden, durch Schleuderguß hergestellten Rohr, beispielsweise durch ein Fügeverfahren hergestellt wird, besteht die Möglichkeit, die Innenoberfläche des Rohrabschnitts vor der Herstellung des Rohrabschnitts beim noch geraden Rohr spanabhebend zu bearbeiten, wodurch eine sehr glatte, homogene Innenoberfläche erzeugt werden kann. Dies kann bei den im statischen Gußverfahren herstellungsbedingt bereits mit Rohrbogen hergestellten Fittings nicht erreicht werden. Außerdem ist bei der Herstellung des Rohrabschnitts aus Schfeudergüßrohren eine zusätzliche Veredelung der Innenoberfläche, beispielsweise durch Rollieren, leicht möglich.

Besonders bevorzugt wird der Rohrabschnitt durch induktives Biegen eines Schleudergußrohrs erzeugt. Dabei können Schleudergußrohre eingesetzt werden, deren Außenoberfläche nach dem Schleuderguß nicht behandelt wurde.

Besonders um bei der nachfolgenden spanabhebenden Innenbearbeitung der Rohre auftretende Kaltverfestigung zu minimieren, wird das Schleudergußrohr vor dem induktiven Biegen wärmebehandelt, insbesondere durch Lösungs- bzw. Spannungsarmglühen. Bevorzugt wird bei der Wärmebehandlung ein Temperaturbereich von 800° bis 1200°, insbesondere von 850° bis 1100° gewählt. Bevorzugt wird durch das Wärmebehandeln gewährleistet, daß Phasen aufgelöst werden, die zur Versprödung des Werkstoffs führen (γ'). Ebenfalls kann durch das Wärmebehandeln die Menge an Primär- und Sekundärcarbidausscheidungen gering gehalten werden.

Erfindungsgemäß werden der zuvor beschriebene erfindungsgemäße Rohrabschnitt als Fittingersatz für Rohrschlangen verwendet. Insbesondere können bei bereits bestehenden Rohrschlangen zu ersetzende Fittings mit den erfindungsgemäßen Rohrabschnitten ersetzt werden.

Erfindungsgemäß wird der zuvor beschriebene Rohrabschnitt oder eine zuvor beschriebene Rohrschlange in einer petrochemischen Anlage, bevorzugt in einem Cracker, besonders bevorzugt in einem Ethylencracker, verwendet.

Nachfolgend wird die Erfindung anhand einer ein Ausführungsbeispiel darstellenden Zeichnung näher erläutert. In der Zeichnung zeigen:
- Fig. 1: einen herkömmlichen Rohrabschnitt einer Rohrschlange in einer Draufsicht von oben,
- Fig. 2: einen herkömmlichen Rohrabschnitt einer Rohrschlange in einer Ansicht von hinten,
- Fig. 3: einen erfindungsgemäßen Rohrabschnitt einer Rohrschlange in einer Draufsicht von oben und
- Fig. 4: einen erfindungsgemäßen Rohrabschnitt einer Rohrschlange in einer Ansicht von hinten.

Bei dem bisher verwendeten, in Fig. 1 und 2 dargestellten Rohrabschnitt besteht dieser aus 3 Einzelstücken in Form zweier Fittings 1, 2 und eines Zwischenrohrs 3, die durch Rundschweißnähte 4 miteinander verbunden sind. An ihren anderen Enden sind die Fittings 1,2 mit geradlinigen Rohren 5, 6 der Rohrschlange durch Rundschweißnähte 7 verbunden.

Deutlich zu erkennen ist die im Verhältnis zum Zwischenrohr 3 größere Dikke der Fittings 1, 2. Diese im herkömmlichen Gußverfahren hergestellten Fittings 1, 2 weisen eine größere Wanddicke auf, als das Zwischenrohr, wodurch sich ein unterschiedlicher Wärmedurchgang ergibt. Außerdem ist der dargestellte, herkömmliche Rohrabschnitt aufgrund der Rundschweißnähte aufwendig herzustellen.

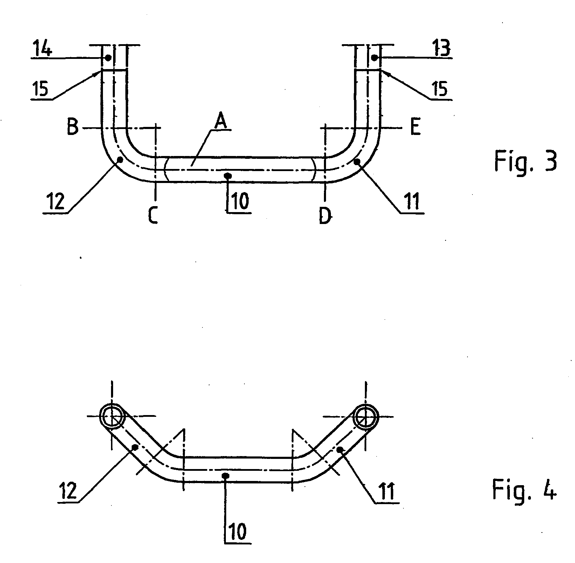

Der erfindungsgemäße Rohrabschnitt ist in Fig. 3, 4 dargestellt. Er ist aus einem Schleudergußrohr einstückig durch lnduktivbiegen hergestellt. Die Längsachse A des Rohrabschnitts ändert sich zwischen den Punkten B und C sowie zwischen den Punkten D und E beständig. Zwischen den Punkten C und D ist ein Zwischenbereich vorgesehen, bei dem sich die Ausrichtung der Längsachse des Rohrs nicht ändert. Der erfindungsgemäße Rohrabschnitt 10 weist demnach zwei Rohrbogen 11, 12 auf. Wie die Zusammenschau der Figuren 3 und 4 ergibt, verläuft die Längsachse A zwischen den Punkten B und E nicht in einer Ebene. Über Rundschweißnähte 15 ist der Rohrabschnitt 10 mit geradlinigen Rohren 13, 14 einer Rohrschlange verbunden.

## Patentansprüche

1. Aus einem einstückigen Schleudergussrohr hergestellter, metallischer Rohrabschnitt (10) für eine Rohrschlange, der mindestens zwei als Rohrbögen ausgeführte Bereiche (11, 12) aufweist, in denen sich die Ausrichtung der Längsachse des Rohrabschnitts beständig ändert, und bei dem zwischen diesen als Rohrbögen ausgeführten Bereichen (11,12) ein Bereich vorgesehen ist, in dem sich die Ausrichtung der Längsachse des Rohrabschnitts (10) nicht ändert, wobei der Rohrabschnitt (10) aus einem der DIN EN 10027 Teil 1 Werkstoffe GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, GX55NiCrWZr33-30-04 besteht.

2. Rohrabschnitt nach Anspruch 1, **dadurch gekennzeichnet, daß** die Längsachse (A) einzelner Teilabschnitte des Rohrabschnitts (10) zwischen zwei Enden des Rohrabschnitts (10) nicht in einer Ebene verläuft.

3. Rohrabschnitt nach Anspruch 1 oder 2, **dadurch gekennzeichnet, daß** das Verhältnis von Biegeradius zur Rohrdurchmesser eines Rohrbogens (11,12) zumindest abschnittsweise kleiner als 1.5 ist.

4. Rohrabschnitt nach Anspruch 3, **dadurch gekennzeichnet, daß** das Verhältnis von Biegeradius zur Rohrdurchmesser eines Rohrbogens (11.12) zumindest abschnittsweise kleiner als 1.1. insbesondere kleiner oder gleich 1,04 ist.

5. Rohrabschnitt nach einem der Ansprüche 1 bis 4, **dadurch gekennzeichnet, daß** die Zwischenlänge zwischen zwei Rohrbögen kleiner ist als 300 mm.

6. Rohrabschnitt nach Anspruch 5, **dadurch gekennzeichnet, daß** die Zwischenlänge zwischen zwei Rohrbögen kleiner oder gleich 40 mm ist.

7. Rohrabschnitt nach einem der Ansprüche 1 bis 6, **dadurch gekennzeichnet, daß** der Rohrabschnitt (10) im wesentlichen die gleiche Wandstärke aufweist.

8. Rohrabschnitt nach Anspruch 7, **dadurch gekennzeichnet, daß** die Wandstärke des gesamten Rohrabschnitts (10) zwischen 6 mm und 14 mm liegt.

9. Rohrabschnitt nach einem der Ansprüche 1 bis 8, **dadurch gekennzeichnet, daß** die Innenoberfläche des Rohrabschnitts (10) zumindest abschnittsweise eine Rauhigkeit von weniger als 12 Rₐ aufweist.

10. Rohrabschnitt nach Anspruch 9, **dadurch gekennzeichnet, daß** die Innenoberfläche des Rohrabschnitts zumindest abschnittsweise eine Rauhigkeit von weniger als 3,2 Rₐ aufweist.

11. Rohrschlange für eine chemische Anlage, die aus durch mindestens einen Rohrabschnitt miteinander verbundenen Rohren zusammengesetzt ist, **gekennzeichnet durch** mindestens einen zumindest an einem seiner Enden mit einem der Rohre (13, 14) verbundenen Rohrabschnitt (10) nach einem der Ansprüche 1 bis 10.

12. Rohrschlange nach Anspruch 11, **dadurch gekennzeichnet, daß** der Rohrabschnitt zumindest an einem seiner Enden mit einem Rohr (13. 14) oder Rohrabschnitten verbunden ist, das bzw. der aus demselben Werkstoff hergestellt ist.

13. Verfahren zum Herstellen eines Rohrabschnitts nach einem der Ansprüche 1 bis 10 oder einer Rohrschlange nach einem der Ansprüche 11 oder 12, **dadurch gekennzeichnet, daß** das Schleudergußrohr durch induktives Biegen verformt wird.

14. Verfahren nach Anspruch 13, **dadurch gekennzeichnet, daß** das Schleudergußrohr vor dem induktiven Biegen wärmebehandelt wird.

15. Verfahren nach Anspruch 14, **dadurch gekennzeichnet, daß** das Schleudergußrohr vor dem induktiven Biegen einer Wärmebehandlung mit einer Temperatur von 800°C bis 1200 °C unterzogen wird.

16. Verwendung eines Rohrabschnitts nach einem der Ansprüche 1 bis 10 als Fittingersatz für Rohrschlangen mit Fittings.

17. Verwendung eines Rohrabschnitts nach einem der Ansprüche 1 bis 10 oder einer Rohrschlange nach einem der Ansprüche 11 oder 12 in einem Cracker.

## Claims

1. Metallic pipe section (10) manufactured from a single-piece centrifugally cast pipe for a pipeline which has at least two areas (11, 12) designed as pipe bends, in which the alignment of the longitudinal axis of the pipe section changes constantly, and in which an area is provided between these areas designed as pipe bends in which the alignment of the longitudinal axis of the pipe section does not change, wherein the pipe section (10) consists of one of the materials from DIN EN 10027 Part 1, GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, GX55NiCrWZr33-30-04.

2. Pipe section according to Claim 1, **characterised in that** the longitudinal axis (A) of individual part sections of the pipe section (10) does not run in one plane between two ends of the pipe section (10).

3. Pipe section according to Claim 1 or 2, **characterised in that** the ratio of the bending radius to the pipe diameter of a pipe bend (11, 12) is at least, section by section, less than 1.5.

4. Pipe section according to Claim 3, **characterised in that** the ratio of the bending radius to the pipe diameter of a pipe bend (11, 12) is at least, section by section, less than 1.1, and in particular less than or equal to 1.04.

5. Pipe section according to one of Claims 1 to 4, **characterised in that** the intermediate length between two pipe bends is less than 300 mm.

6. Pipe section according to Claim 5, **characterised in that** the intermediate length between two pipe bends is less than or equal to 40 mm.

7. Pipe section according to one of Claims 1 to 6, **characterised in that** the pipe section (10) has essentially the same wall thickness.

8. Pipe section according to Claim 7, **characterised in that** the wall thickness of the pipe section (10) as a whole is between 6 mm and 14 mm.

9. Pipe section according to one of Claims 1 to 8, **characterised in that** the inner surface of the pipe section (10) has at least section by section a roughness of less than 12 Rₐ.

10. Pipe section according to Claim 9, **characterised in that** the inner surface of the pipe section has at least section by section a roughness of less than 3.2 Rₐ.

11. Pipeline for a chemical plant, composed of pipes connected to one another by at least one pipe section, **characterised by** at least one pipe section (10) being connected at least at one of its ends to one of the pipes (13, 14), according to one of Claims 1 to 10.

12. Pipeline according to Claim 11, **characterised in that** the pipe section is connected at least at one of its ends to a pipe (13, 14) or pipe sections, which is manufactured from the same material.

13. Method for the manufacture of a pipe section according to one of Claims 1 to 10, or a pipeline according to one of Claims 11 or 12, **characterised in that** the centrifugally cast pipe is formed by inductive bending.

14. Method according to Claim 13, **characterised in that** the centrifugally cast pipe is heat-treated before the inductive bending.

15. Method according to Claim 14, **characterised in that** the centrifugally cast pipe is subjected to heat treatment at a temperature from 800°C to 1,200°C before the inductive bending.

16. Use of a pipe section according to one of Claims 1 to 10 as a fitting replacement for pipelines with fittings.

17. Use of a pipe section according to one of Claims 1 to 10 or of a pipeline according to one of Claims 11 or 12 in a cracker.

## Revendications

1. Partie de tube (10) métallique pour un tube en serpentin, fabriquée à partir d'un tuyau de fonte centrifugée monobloc, laquelle présente au moins deux zones (11, 12) formées comme arcs ou coudes de tube, dans lesquelles l'orientation de l'axe longitudinal de la partie de tube change continuellement, et dans laquelle est prévue entre ces zones (11, 12) formées comme arcs ou coudes de tube une zone, dans laquelle l'orientation de l'axe longitudinal de la partie de tube (10) ne change pas, la partie de tube (10) se composant d'un des matériaux GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, GX55NiCrWZr33-30-04 de la norme DIN EN 10027, Partie 1.

2. Partie de tube selon la revendication 1, **caractérisée en ce que** l'axe longitudinal (A) de différentes sections de la partie de tube (10) entre les deux extrémités de la partie de tube (10) ne s'étend pas dans un seul plan.

3. Partie de tube selon la revendication 1 ou 2, **caractérisée en ce que** le rapport entre rayon de courbure et diamètre de tube d'un arc ou coude de tube (11, 12) est, au moins partiellement, inférieur à 1,5.

4. Partie de tube selon la revendication 3, **caractérisée en ce que** le rapport entre rayon de courbure et diamètre de tube d'un arc ou coude de tube (11, 12) est, au moins partiellement, inférieur à 1,1, en particulier inférieur ou égal à 1,04.

5. Partie de tube selon l'une quelconque des revendications 1 à 4, **caractérisée en ce que** la longueur intermédiaire entre deux arcs ou coudes de tube est inférieure à 300 mm.

6. Partie de tube selon la revendication 5, **caractérisée en ce que** la longueur intermédiaire entre deux arcs ou coudes de tube est inférieure ou égale à 40 mm.

7. Partie de tube selon l'une quelconque des revendications 1 à 6, **caractérisée en ce que** la partie de tube (10) présente essentiellement la même épaisseur de paroi.

8. Partie de tube selon la revendication 7, **caractérisée en que** l'épaisseur de paroi de toute la partie de tube (10) est comprise entre 6 mm et 14 mm.

9. Partie de tube selon l'une quelconque des revendications 1 à 8, **caractérisée en ce que** la surface intérieure de la partie de tube (10) présente, au moins partiellement, une rugosité de moins de 12 Rₐ.

10. Partie de tube selon la revendication 9, **caractérisée en ce que** la surface intérieure de la partie de tube comporte, au moins partiellement une rugosité de moins de 3,2 Rₐ.

11. Tube en serpentin pour une installation chimique qui se compose de tubes reliés les uns aux autres par au moins une partie de tube, **caractérisé par** au moins une partie de tube (10) reliée au moins au niveau d'une de ses extrémités à l'un des tubes (13, 14) selon l'une quelconque des revendications 1 à 10.

12. Tube en serpentin selon la revendication 11, **caractérisé en ce que** la partie de tube est reliée au moins au niveau d'une de ses extrémités à un tube (13, 14) ou à des parties de tube, lequel et/ou lesquelles est/sont fabriqué(es) à partir du même matériau.

13. Procédé de fabrication d'une partie de tube selon l'une quelconque des revendications 1 à 10 ou d'un tube en serpentin selon l'une quelconque des revendications 11 ou 12, **caractérisé en ce que** le tube de fonte centrifugée est déformé par cintrage par induction.

14. Procédé selon la revendication 13, **caractérisé en ce que** le tuyau de fonte centrifugée subit un traitement thermique avant le cintrage par induction.

15. Procédé selon la revendication 14, **caractérisé en ce que** le tuyau de fonte centrifugée subit un traitement thermique à une température de 800°C à 1200°C avant le cintrage par induction.

16. Utilisation d'une partie de tube selon l'une quelconque des revendications 1 à 10 en remplacement de raccord pour tubes en serpentin avec raccords.

17. Utilisation d'une partie de tube selon l'une quelconque des revendications 1 à 10 ou d'un tube en serpentin selon l'une quelconque des revendications 11 ou 12 dans un craqueur.
